# EUROPÄISCHE PATENTANMELDUNG

(11) **EP 3 239 918 A1**
(43) Veröffentlichungstag der Anmeldung: **01.11.2017**
(21) Anmeldenummer: 17168439.2
(22) Anmeldetag: 27.04.2017
(51) Int. Cl.: G06Q 30/06, G07F 13/00

(54) **VERFAHREN ZUR FREIGABE DER ENTNAHME EINER DEFINIERTEN ENERGIEMENGE UND ENTNAHMEVORRICHTUNG**

(30) Priorität: 27.04.2016 DE 102016107838
(71) Anmelder: Deutsche Telekom AG, 53113 Bonn (DE)
(72) Erfinder: KRAMARZ - VON KOHOUT, Gerhard, 53113 Bonn (DE)
(74) Vertreter: Blumbach Zinngrebe

(57) **Zusammenfassung**

Um die Bereitstellung von Energie, insbesondere von Treibstoffen oder Kraftstoffen für durch einen Verbrennungsmotor angetriebene Fahrzeuge oder von elektrischer Energie für Elektrofahrzeuge, flexibler zu gestalten, sieht die Erfindung ein Verfahren zur Freigabe der Entnahme einer definierten Energiemenge an einer Entnahmevorrichtung (100) vor mit den Schritten:
- Bereitstellen eines Freigabecodes und einer zugeordneten Freigabe-Mengeninformation, wobei die Freigabe-Mengeninformation eine feste Entnahmemenge oder eine Obergrenze und/oder eine Untergrenze für eine variable Entnahmemenge definiert,
- Übermitteln des Freigabecodes an die Entnahmevorrichtung (100),
- Prüfen des Freigabecodes auf Gültigkeit durch die Entnahmevorrichtung (100),
- Ermitteln der Freigabe-Mengeninformation in Abhängigkeit des Freigabecodes durch die Entnahmevorrichtung (100), und
- Freigabe der Entnahme einer festen oder variablen Energiemenge in Abhängigkeit der ermittelten Freigabe-Mengeninformation bei erfolgreicher Prüfung des Freigabecodes.

Ferner sieht die Erfindung ein zur Durchführung des Verfahrens ausgebildetes System und eine Entnahmevorrichtung vor.

## Beschreibung

Die Erfindung betrifft allgemein den Verkauf und die Bereitstellung von Energie, wie beispielsweise den Verkauf elektrischer Energie oder fossiler Kraftstoffe an Tankstellen, und insbesondere ein Verfahren und ein System zur Freigabe der Entnahme einer definierten Energiemenge, sowie eine entsprechende Entnahmevorrichtung.

Die Preise für Treibstoffe schwanken sehr stark. An einem Tag ändert eine Tankstelle die Preise für die von ihr angebotenen Treibstoffe oftmals vielmals.

Die Erfahrung zeigt, dass die Preise in der Nacht und am Vormittag meist teurer sind als am Nachmittag oder Abend. Viele Autofahrer sind preisbewusst, wissen um die Preistendenzen beim Treibstoffverkauf und tanken deshalb bevorzugt nachmittags oder abends.

Es ist bekannt, dass sich Autofahrer im Internet auf entsprechenden Vergleichsportalen bzw. über eine entsprechende App über die aktuellen Preise für Treibstoffe informieren können, wobei als App insbesondere eine mobile App eingesetzt werden kann, d.h. eine Anwendungssoftware für mobile Telekommunikationsendgeräte wie zum Beispiel Smartphones, die unter Einsatz eines mobilen Betriebssystems ausgeführt wird.

In nachteiliger Weise sind preisbewusste Autofahrer somit an bestimmte Tankzeiten gebunden.

Dass dies auch für Tankstellenpächter nachteilig sein kann, wird beispielsweise deutlich durch den Artikel "Tankstellenpächter genervt über häufig wechselnde Benzinpreise", veröffentlicht unter "http://www.wdr2.de/nachrichten/wdrzweinamo143594.html". Diesem Artikel ist zu entnehmen, dass die Tankstellenpächter insbesondere deswegen Umsatz verlieren, weil die Preise morgens in der Regel höher sind als abends. Dies macht den Betreibern nach Angaben des Tankstellenverbandes zu schaffen, weil sie in ihrem Shop auf den Frühstücksangeboten sitzenbleiben, da viele PKW-Fahrer zum Tanken inzwischen gezielt nachmittags und abends die Tankstellen ansteuern, wobei am Abend den Angaben zufolge aber immer weniger im Shop gekauft wird.

Wie beispielsweise dem Artikel "Tankbetrug: 80.000 Fälle von Benzindiebstahl pro Jahr", veröffentlicht unter "http://www.spiegel.de/auto/aktuell/benzin-80-000-faelle-von-spritklau-an-der-tankstelle-a-1087639.html", zu entnehmen ist, stellt auch der Diebstahl von Kraftstoff weiterhin ein großes Problem dar.

Es ist die Aufgabe der vorliegenden Erfindung, einen Weg aufzuzeigen, wie die Bereitstellung von Energie, insbesondere von Treibstoffen oder Kraftstoffen für durch einen Verbrennungsmotor angetriebene Fahrzeuge oder elektrischer Energie für Elektrofahrzeuge, flexibler und diebstahlsicher erfolgen kann.

Diese Aufgabe wird durch die Merkmale der unabhängigen Ansprüche gelöst. Vorteilhafte Ausführungsformen sind Gegenstand der abhängigen Ansprüche.

Ein Kerngedanke der Erfindung ist darin zu sehen, ein System und Verfahren zur Verfügung zu stellen, welche es erlauben, die Vorgänge des Kaufs einer Energiemenge, zum Beispiel eines Treibstoffes, und der Entnahme der gekauften Energiemenge, zum Beispiel des Tankens des gekauften Treibstoffes, zu entkoppeln und so beispielsweise zu ermöglichen, abends Treibstoff zu kaufen und diesen morgens zu tanken. Vorteilhaft daran sind insbesondere zum einen, dass der Autofahrer Treibstoff oder eine andere Energieart wie beispielsweise elektrische Energie kaufen kann, wenn der Preis aus seiner Sicht günstig ist und ohne zur Tankstelle fahren zu müssen, und dann anschließend tankt, wenn er mag und Zeit hat, und zum anderen die Erhöhung der Diebstahlsicherheit, da das Bezahlen vor dem Tanken erfolgen kann.

Ein Verfahren zur Freigabe der Entnahme einer definierten Energiemenge an einer Entnahmevorrichtung umfasst das Bereitstellen eines Freigabecodes und einer zugeordneten Freigabe-Mengeninformation, wobei die Freigabe-Mengeninformation eine feste oder variable Entnahmemenge definiert, das Übermitteln des Freigabecodes an die Entnahmevorrichtung, das Prüfen des Freigabecodes auf Gültigkeit durch die Entnahmevorrichtung, das Ermitteln der Freigabe-Mengeninformation in Abhängigkeit des Freigabecodes durch die Entnahmevorrichtung, und die Freigabe der Entnahme einer festen oder variablen Energiemenge in Abhängigkeit der ermittelten Freigabe-Mengeninformation bei erfolgreicher Prüfung des Freigabecodes.

Mit anderen Worten wird durch die Freigabe-Mengeninformation eine fest definierte freizugebende Energiemenge festgelegt oder alternativ festgelegt, dass eine Freigabe einer variablen Energiemenge erfolgen soll.

Je nach Anwendung kann vorteilhaft zusätzlich vorgesehen sein, die Freigabe einer variablen Energiemenge nach unten oder oben zu limitieren. Zu diesem Zweck ist vorteilhaft vorgesehen, dass die Freigabe-Mengeninformation eine Obergrenze und/oder eine Untergrenze für eine variable Entnahmemenge umfasst. In diesem Fall erfolgt eine Freigabe einer variablen, jedoch durch die Ober- und/oder Untergrenze limitierten Energiemenge.

Da heute üblicherweise an Tankstellen in der Nacht die Preise für Treibstoff signifikant höher sind als am Tage, um beispielsweise die erhöhten Personalkosten auszugleichen, kann je nach Anwendung vorteilhaft zusätzlich vorgesehen sein, für die Entnahme des Treibstoffs zu bestimmten Zeiten einen preislichen Zuschlag zu berücksichtigen. Auf den Zuschlag wird der Kunde beim Kauf hingewiesen. Der Zuschlag kann die maximal zu entnehmende Menge entsprechend reduzieren oder den Preis der entnommenen Menge entsprechend erhöhen. Beträgt beispielsweise beim Kaufvorgang der Preis für 11 Treibstoff 1€ und beträgt der Nachtzuschlag für Tanken zwischen 23:00 h und 06:00 h 10ct pro Liter, so darf der Kunde im Falle definierter Energiemenge von 501 zu 50€ tagsüber 501 und nachts 45.451 tanken und muss im Falle variabler Energiemenge, wenn er tatsächlich 50 l tankt, tagsüber € 50 und nachts € 55 bezahlen.

Zu diesem Zweck wird vorteilhaft eine dem Freigabecode zugeordnete Freigabeinformation, durch welche ein Zeitpunkt und/oder ein Zeitbereich definiert wird, bereitgestellt und durch die Entnahmevorrichtung in Abhängigkeit des Freigabecodes ermittelt. Insbesondere wird durch die Freigabeinformation ein Tageszeitbereich definiert. Das Bereitstellen und Ermitteln dieser Freigabeinformation kann in gleicher Weise erfolgen wie nachfolgend für die Freigabe-Mengeninformation beschrieben.

Die Freigabe der Entnahme einer festen Energiemenge kann vorteilhaft in Abhängigkeit dieser ermittelten Freigabeinformation erfolgen, d.h. in Abhängigkeit des definierten Zeitpunktes und/oder Zeitbereiches, wobei durch die Entnahmevorrichtung insbesondere der Entnahmezeitpunkt mit dem definierten Zeitpunkt und/oder Zeitbereich verglichen wird. So kann beispielsweise eine in der Freigabe-Mengeninformation definierte feste Entnahmemenge in Abhängigkeit des Vergleichsergebnisses um einen vorgegebenen Faktor angepasst werden, wobei eine Anpassung je nach Anwendung dann erfolgen kann, wenn der Entnahmezeitpunkt vor einem definierten Zeitpunkt, nach einem definierten Zeitpunkt, innerhalb eines definierten Zeitbereiches oder außerhalb eines definierten Zeitbereiches liegt.

Beispielsweise kann in der Freigabeinformation ein zuschlagsfreier Zeitbereich definiert sein, beispielsweise definiert als Tageszeit zwischen 6:00 h und 22:00 h. Stellt die Entnahmevorrichtung fest, dass der Entnahmezeitpunkt außerhalb dieses Zeitbereiches liegt, die Entnahme also beispielsweise um 3:00 h nachts erfolgt, und wird durch die Freigabe-Mengeninformation wie oben beispielhaft angegeben eine feste Entnahmemenge von 50 l definiert, so kann eine Anpassung um einen vorgegeben Faktor von beispielsweise 0,909 auf 45,45 l erfolgen, wobei dann nur diese angepasste Energiemenge durch die Entnahmevorrichtung zur Entnahme freigegeben wird. Dieser beispielhafte Mengenfaktor entspricht einem Preiszuschlag von 10 %. Der zu verwendende Faktor kann auch in der Freigabeinformation enthalten sein.

Es kann auch vorgesehen sein, dass das Prüfen des Freigabecodes auf Gültigkeit in Abhängigkeit dieser ermittelten Freigabeinformation, d.h. in Abhängigkeit des definierten Zeitpunktes und/oder Zeitbereiches erfolgt. Zu diesem Zweck kann das Prüfen des Freigabecodes auf Gültigkeit insbesondere einen Vergleich des Entnahmezeitpunktes mit dem in der Freigabeinformation definierten Zeitpunkt und/oder Zeitbereich umfassen, wobei der Freigabecode je nach Anwendung nur dann als gültig erkannt wird, wenn der Entnahmezeitpunkt vor einem definierten Zeitpunkt, nach einem definierten Zeitpunkt, innerhalb eines definierten Zeitbereiches oder außerhalb eines definierten Zeitbereiches liegt. Auf diese Weise kann eine Entnahme beispielsweise auf vorgegebene Tageszeiten begrenzt werden, zum Beispiel zwischen 6:00 h und 22:00 h. Auch kann auf diese Weise die zeitliche Gültigkeit eines Freigabecodes begrenzt werden, beispielsweise auf ein Jahr ab Erstellungsdatum.

Der Freigabecode kann in numerischer oder alphanumerischer Form bereitgestellt werden. Zu Übermittlungszwecken kann der Freigabecode auch in einer Grafik codiert werden, d.h. als codierte Grafik bereitgestellt werden, wie zum Beispiel als Bar-Code oder QR-Code. Insbesondere werden der Freigabecode und die zugeordnete Freigabe-Mengeninformation nach erfolgreicher Durchführung eines elektronischen Bezahlvorgangs oder Bestellvorgangs bereitgestellt, wobei der elektronische Bezahlvorgang oder Bestellvorgang insbesondere über ein von einem Internet-Server bereitgestelltes Portal durchgeführt wird.

So kann beispielsweise über das Portal Energie in Form von elektrischer Energie oder in Form von Kraftstoff zum Kauf angeboten werden, wobei der Preis pro Mengeneinheit typischerweise zeitlich variiert. Ein Nutzer des Portals, der beispielsweise mit einem an das Internet angeschlossenen Computer oder über eine auf einem Smartphone installierte mobile App via Internet auf das Portal zugreift, kann zum jeweils aktuellen Preis eine gewünschte Energiemenge kaufen, wobei Zuschläge fällig werden können etwa in Abhängigkeit der Tageszeit des Zeitpunktes der späteren Kraftstoffentnahme. Insbesondere hat der Nutzer die Wahl, eine feste oder eine variable Energiemenge zu kaufen, zum Beispiel 50 Liter Diesel oder eine Tankfüllung bis zu einer maximalen Entnahmemenge, wobei zusätzlich eine Mindestentnahmemenge vorgegeben sein kann. Bei Kauf einer festen Energiemenge kann die Bezahlung mittels eines an sich bekannten elektronischen Bezahlvorgangs erfolgen. Bei Kauf einer variablen Energiemenge erfolgt vorzugsweise zunächst ein Bestellvorgang, wobei die Kaufabwicklung nach erfolgter Entnahme der Energiemenge erfolgt. Die Bezahlung einer variablen Energiemenge nach Entnahme kann beispielsweise mittels einer bei einer Vorabregistrierung festgelegten Zahlungsart erfolgen, wie zum Beispiel mittels Kreditkarte, Lastschrift oder auch Rechnung. Der Bestellvorgang kann dabei auch eine Vorabautorisierung umfassen, so dass bereits bei Bestellung einer variablen Energiemenge eine verbindliche Zahlungsverpflichtung besteht. Dadurch wird die Diebstahlsicherheit weiter erhöht. Zum Zweck der Kaufabwicklung bei Kauf einer variablen Energiemenge sieht das Verfahren vorteilhaft vor, nach Entnehmen einer Energiemenge an der Entnahmevorrichtung in Abhängigkeit der entnommenen Energiemenge eine Entnahmeinformation durch die Entnahmevorrichtung zu erfassen und diese Entnahmeinformation dem Anbieter zum Durchführen einer Kaufabwicklung zu einem Bestellvorgang bereitzustellen. Um bei der Kaufabwicklung beispielsweise tageszeitabhängige Preiszuschläge zu berücksichtigen, wird die Entnahmeinformation zusätzlich oder alternativ in Abhängigkeit des Entnahmezeitpunktes erfasst. Mit anderen Worten wird eine Entnahmeinformation erzeugt, welche eine Information über die entnommene Energiemenge und/oder eine Information über den Entnahmezeitpunkt umfasst.

Nach erfolgter Bezahlung bzw. Bestellung erzeugt der Internet-Server den Freigabecode und überträgt diesen zum Computer oder Smartphone des Kunden. Der Bezahl- bzw. Bestellvorgang ist dadurch von der Entnahme zeitlich und räumlich entkoppelt.

Besonders vorteilhaft werden nach erfolgreich durchgeführtem Bezahl- bzw. Bestellvorgang alle diesen Vorgang betreffenden Daten anbieterseitig gespeichert. Dies kann in dem das Portal bereitstellenden Internet-Server erfolgen oder beispielsweise in einer Datenbank eines Anbieters, d.h. zum Beispiel einer Tankstellenkette oder einer individuellen Tankstelle. Die anbieterseitig gespeicherten Daten umfassen dabei insbesondere auch den Freigabecode sowie zugeordnete Freigabeinformationen, welche wenigstens die zugeordnete Freigabe-Mengeninformation umfassen. Darüber hinaus können noch weitere Freigabeinformationen wie zum Beispiel Energieart und/oder Kraftstoffart und/oder ein Zeitpunkt, bis zu dem der Freigabecode gültig ist, und/oder ein Zeitbereich, während dessen eine zuschlagsfreie Entnahme möglich ist, umfasst sein, sowie weitere Informationen, wie zum Beispiel Kauf- oder Bestelldatum, Bestellnummer, Kaufpreis, Kundennummer oder weitere für die Kaufabwicklung erforderliche Informationen.

Bei Speicherung in einer anbieterseitigen Datenbank werden die entsprechenden Informationen vorteilhaft nach erfolgter Bezahlung bzw. Bestellung von dem Internet-Server, welcher das Portal bereitstellt, dem jeweiligen Anbieter übermittelt.

Die zugeordnete Freigabe-Mengeninformation kann auf verschiedene Arten bereitgestellt werden. Vorteilhaft kann die Freigabe-Mengeninformation im Freigabecode enthalten sein. Die Freigabe-Mengeninformation kann auch als zusätzliche Freigabeinformation zusammen mit dem Freigabecode zum Computer oder Smartphone des Kunden übertragen werden. In einer weiteren vorteilhaften Ausgestaltung des Verfahrens ist vorgesehen, die Freigabe-Mengeninformation durch die Entnahmevorrichtung abrufbar zu hinterlegen, insbesondere in einer Datenbank, auf welche beispielsweise über das Internet zugegriffen werden kann, wobei ein Abrufen unter Verwendung des zugeordneten Freigabecodes erfolgt. Das Ermitteln der Freigabe-Mengeninformation umfasst dementsprechend insbesondere das Ermitteln einer im Freigabecode enthaltenen Freigabe-Mengeninformation, das Ermitteln einer zusammen mit dem Freigabecode übertragenen Freigabe-Mengeninformation oder das Abrufen der Freigabe-Mengeninformation unter Verwendung des Freigabecodes.

In einer besonders vorteilhaften Ausgestaltung des Verfahrens ist der Freigabecode als Link, insbesondere als Internet-Link, ausgebildet, welcher auf die beim Anbieter gespeicherten Informationen verweist, wobei die Entnahmevorrichtung unter Verwendung dieses Links zumindest die gespeicherte Freigabe-Mengeninformation abrufen kann.

Durch das Verfahren wird einem Autofahrer ermöglicht, Energie, insbesondere Kraftstoff, wie Benzin, Diesel oder Gas, oder elektrische Energie preisbewusst zu kaufen, ohne an bestimmte Zeiten für die Entnahme bzw. das Tanken gebunden zu sein. Dadurch, dass mittels der Freigabe-Mengeninformation die Freigabe der Entnahme einer definierten Energiemenge ermöglicht wird, ist bei der Entnahme, d.h. zum Beispiel beim Tanken an der Tankstelle in vorteilhafter Weise kein Bezahlvorgang mehr erforderlich, wodurch der Service-Aufwand seitens der Tankstelle erheblich reduziert werden kann. Auch eine Umrechnung einer entnommenen Energiemenge in einen zu zahlenden Geldbetrag kann in der Entnahmevorrichtung vorteilhaft entfallen, wodurch der Aufbau der Entnahmevorrichtung vereinfacht werden kann.

Wie bereits beschrieben handelt es sich bei der definierten Energiemenge vorzugsweise um eine definierte Menge fossiler Energie, insbesondere in Form einer definierten Menge eines definierten Kraftstoffes, oder um eine definierte Menge elektrischer Energie. Vorteilhaft wird daher eine dem Freigabecode zugeordnete Freigabeinformation bereitgestellt, durch welche die Energieart und/oder die Kraftstoffart definiert wird, und welche durch die Entnahmevorrichtung in Abhängigkeit des Freigabecodes ermittelt wird. Das Bereitstellen und Ermitteln dieser Freigabeinformation kann in gleicher Weise erfolgen wie oben für die Freigabe-Mengeninformation beschrieben. Bietet der jeweilige Anbieter nur eine Energieart bzw. Kraftstoffart zum Verkauf an, so kann das Bereitstellen dieser zusätzlichen Freigabeinformation entfallen. Die Freigabe der Entnahme erfolgt dementsprechend vorteilhaft in Abhängigkeit der ermittelten Freigabeinformation derart, dass nur die definierte Energieart und/oder die Kraftstoffart freigegeben wird.

Um eine Freigabe der Entnahme zu bewirken, sieht das Verfahren vor, dass der Freigabecode zu der Entnahmevorrichtung übertragen wird. Dies kann auf unterschiedliche Arten erfolgen, wobei die Entnahmevorrichtung für zumindest eine Art der Übertragung ausgebildet ist. Vorteilhaft kann die Entnahmevorrichtung auch für mehrere Arten der Übertragung ausgebildet sein.

Im einfachsten Fall weist die Entnahmevorrichtung eine Eingabeeinrichtung auf, mittels der das Übermitteln des Freigabecodes an die Entnahmevorrichtung erfolgt. Diese kann beispielsweise als Benutzerschnittstelle mit einem numerischen oder alphanumerischen Tastenfeld oder Keypad und einem Display ausgebildet sein, über die eine manuelle Eingabe des Freigabecodes ermöglicht wird. Alternativ kann die Eingabeeinrichtung auch als Lesegerät zum automatischen Einlesen des Freigabecodes ausgebildet sein, beispielsweise als Scanner, mittels dessen ein Freigabecode in Form einer codierten Grafik eingelesen werden kann. Zu diesem Zweck kann der Freigabecode vorteilhaft in Form einer codierten Grafik auf einem mobilen Kommunikationsendgerät wie zum Beispiel einem Smartphone bereitgestellt werden, wobei zum Zweck des Einlesens die codierte Grafik auf einem Display des mobilen Kommunikationsendgerätes angezeigt werden kann.

In einer weiteren vorteilhaften Alternative kann der Freigabecode auf einem Kommunikationsendgerät, insbesondere einem mobilen Kommunikationsendgerät, bereitgestellt und von dem Kommunikationsendgerät zu der Entnahmevorrichtung übertragen werden, insbesondere mittels drahtloser Kommunikation. Zu diesem Zweck weisen das Kommunikationsendgerät und die Entnahmevorrichtung jeweils entsprechende Kommunikationsschnittstellen auf, die beispielsweise auf Bluetooth- oder NFC-Technologie oder auf einer anderen geeigneten drahtgebundenen oder drahtlosen Technologie basieren. Zu diesem Zweck kann der Freigabecode direkt auf ein mobiles Kommunikationsendgerät wie zum Beispiel ein Smartphone übertragen werden, nachdem mit diesem mobilen Kommunikationsendgerät ein Kauf- oder Bestellvorgang erfolgreich abgeschlossen wurde. Der Freigabecode kann aber auch vom Kunden auf ein mobiles Kommunikationsendgerät übertragen werden, um dieses von dort zur Entnahmevorrichtung übertragen zu können, beispielsweise wenn ein Kauf- oder Bestellvorgang mit einem anderen Kommunikationsgerät wie zum Beispiel einem Computer durchgeführt und der Freigabecode zunächst auf diesem Gerät bereitgestellt wurde.

In noch einer weiteren Alternative, in welcher der Freigabecode wiederum auf einem Kommunikationsendgerät bereitgestellt werden kann, erfolgt das Übermitteln des Freigabecodes an die Entnahmevorrichtung dadurch, dass zunächst eine Identifikationsinformation, welche die Entnahmevorrichtung identifiziert, zu dem Kommunikationsendgerät übertragen wird, der Freigabecode dann zusammen mit der Identifikationsinformation von dem Kommunikationsendgerät zu einem entfernten Server über ein Kommunikationsnetzwerk übertragen wird, und der entfernte Server unter Ansprechen auf die empfangene Identifikationsinformation den Freigabecode zu der entsprechenden Entnahmevorrichtung überträgt. In dieser Alternative dient der entfernte Server im Wesentlichen der Weiterleitung des Freigabecodes von dem Kommunikationsendgerät zu der Entnahmevorrichtung. Dies ist insbesondere dann vorteilhaft, wenn das Kommunikationsendgerät und die Entnahmevorrichtung keine kompatiblen Kommunikationsschnittstellen für eine direkte Übertragung des Freigabecodes aufweisen.

Die Freigabe der Entnahme der definierten Energiemenge erfolgt zum Zweck der nachfolgenden Entnahme. Mit anderen Worten umfasst das Verfahren vorteilhaft auch die tatsächliche Entnahme einer freigegebenen festen oder variablen Energiemenge, wobei die Entnahmevorrichtung zu diesem Zweck eine entsprechende Entnahmeeinrichtung wie zum Beispiel eine Zapfsäule oder eine Ladeeinheit zum Aufladen eines Akkumulators eines Elektrofahrzeugs aufweist.

Falls die zur Verfügung stehende Aufnahmekapazität, zum Beispiel das Tankvolumen oder die Akkumulator-Kapazität, nicht ausreichend sind für eine freigegebene feste Energiemenge, kann es dazu kommen, dass die freigegebene feste Energiemenge nicht vollständig entnommen wird.

Für den Fall, dass eine kleinere Energiemenge als die freigegebene feste Energiemenge entnommen wird, sieht das Verfahren vorteilhaft vor, dass ein weiterer Freigabecode und eine zugeordnete weitere Freigabe-Mengeninformation durch die Entnahmevorrichtung erzeugt werden, wobei die weitere Freigabe-Mengeninformation eine feste Entnahmemenge definiert, welche der Differenz der freigegebenen und der entnommenen Energiemenge entspricht, und dass der weitere Freigabecode auf einer Anzeigeeinrichtung der Entnahmevorrichtung angezeigt und/oder der weitere Freigabecode von der Entnahmevorrichtung zu einem Kommunikationsendgerät übertragen wird. Dieser weitere Freigabecode kann dann zu einem späteren Zeitpunkt für eine erneute Entnahme verwendet werden. Da bei einer Anzeige eines numerischen oder alphanumerischen weiteren Freigabecodes der Kunde sich diesen für eine spätere Verwendung merken oder notieren muss, kann beispielsweise auch vorgesehen sein, dass die Entnahmevorrichtung eine Druckereinrichtung umfasst, mittels der der weitere Freigabecode ausgedruckt wird. Vorteilhaft wird die erzeugte weitere Freigabe-Mengeninformation derart in einer Datenbank gespeichert, dass diese unter Verwendung des weiteren Freigabecodes abgerufen werden kann. Das Speichern der weiteren Freigabe-Mengeninformation in der Datenbank wird dabei durch die Entnahmevorrichtung bewirkt.

Vorteilhaft sieht das Verfahren ferner vor, dass der Freigabecode jeweils nach erfolgreicher Prüfung des Freigabecodes entwertet wird, um eine erneute erfolgreiche Prüfung des Freigabecodes zu verhindern.

Das Erzeugen, Prüfen und Entwerten des Freigabecodes kann auf unterschiedliche Arten erfolgen. Beispielsweise kann der Freigabecode eine einzigartige Freigabe-ID umfassen, die für jeden erzeugten Freigabecode unterschiedlich ist, wobei an zentraler Stelle, beispielweise in einem über das Internet zugänglichen Server, der identisch mit dem Internet-Server sein kann, über den das Portal bereitgestellt wird, eine Liste gültiger Freigabe-IDs vorgehalten wird, in die jede neu erzeugte Freigabe-ID eingetragen wird. Der Server kann auch ein dem jeweiligen Anbieter, beispielsweise einer Tankstellenkette oder einer individuellen Tankstelle zugeordneter Server sein. Die Prüfung des Freigabecodes umfasst in diesem Beispiel die Prüfung, ob die in dem zu prüfenden Freigabecode enthaltene Freigabe-ID in der Liste enthalten ist, wobei die Prüfung erfolgreich ist, sofern dies der Fall ist. Das Entwerten eines Freigabecodes erfolgt in diesem Beispiel dadurch, dass die entsprechende Freigabe-ID aus der Liste gelöscht wird. Alternativ kann in der Liste für jede Freigabe-ID die Information gespeichert sein, ob die jeweilige Freigabe-ID gültig oder ungültig ist, wobei bei Bereitstellen eines neuen Freigabecodes eine neue Freigabe-ID in die Liste aufgenommen und auf gültig gesetzt wird oder eine als ungültig gekennzeichnete Freigabe-ID verwendet und auf gültig gesetzt wird. Das Entwerten erfolgt eines Freigabecodes erfolgt dadurch, dass die entsprechende Freigabe-ID auf ungültig gesetzt wird.

Für den Fall, dass der Freigabecode als Link ausgebildet ist, kann eine Prüfung auch bereits darin bestehen, dass geprüft wird, ob mit dem Link auf die erwarteten Informationen, insbesondere zumindest die Freigabe-Mengeninformation, zugegriffen werden kann, d.h. ob unter dem Link abrufbare Informationen eines definierten Formats hinterlegt sind.

Der Freigabecode kann ferner eine Entnahme-ID umfassen, die geeignet ist, eine Entnahmevorrichtung oder eine Gruppe von Entnahmevorrichtungen zu identifizieren, wobei die Prüfung des Freigabecodes durch die Entnahmevorrichtung einen Vergleich der im Freigabecode enthaltenen Entnahme-ID mit einer in der Entnahmevorrichtung gespeicherten ID umfassen kann, wobei die Prüfung nur bei Übereinstimmung erfolgreich ist.

Die Entnahme-ID kann beispielsweise eine individuelle Tankstelle oder eine Tankstellen-Kette identifizieren, wobei diese beim Kauf vom Kunden ausgewählt wird.

Ferner kann der Freigabecode verschlüsselt bereitgestellt werden, wobei in der Entnahmevorrichtung ein entsprechender kryptographischer Schlüssel hinterlegt ist. Die Prüfung des Freigabecodes kann dann das Entschlüsseln des Freigabecodes umfassen.

Wie oben bereits beschrieben, kann die Prüfung des Freigabecodes auf Gültigkeit auch einen Vergleich mit einem durch eine zugeordnete Freigabeinformation definierten Zeitpunkt oder Zeitbereich umfassen, d.h. die Gültigkeit des Freigabecodes kann beispielsweise auf vorgegebene Tageszeiten begrenzt sein oder auf eine vorgegebene Gültigkeitsdauer.

Eine zur Freigabe der Entnahme einer definierten Energiemenge ausgebildete Entnahmevorrichtung umfasst eine Einrichtung zum Empfangen eines Freigabecodes. Ferner umfasst die Entnahmevorrichtung eine Steuerungseinheit, welche dazu ausgebildet ist, den Freigabecode zu prüfen und bei erfolgreicher Prüfung des Freigabecodes eine zugeordnete Freigabe-Mengeninformation, welche eine feste oder variable Entnahmemenge definiert, zu ermitteln und eine Entnahme einer festen oder variablen Energiemenge in Abhängigkeit der ermittelten Freigabe-Mengeninformation freizugeben, sowie eine Entnahmeeinrichtung zur Entnahme einer freigegebenen Energiemenge.

Vorteilhaft ist die Entnahmevorrichtung zur Abgabe einer definierten Menge fossiler Energie, insbesondere in Form einer definierten Menge eines definierten Kraftstoffes, oder einer definierten Menge elektrischer Energie, ausgebildet. Vorzugsweise ist die Steuerungseinheit dementsprechend dazu ausgebildet, in Abhängigkeit des Freigabecodes eine dem Freigabecode zugeordnete Freigabeinformation zu ermitteln, durch welche die Energieart und/oder die Kraftstoffart definiert wird.

Ferner kann die Steuerungseinheit vorteilhaft dazu ausgebildet sein, in Abhängigkeit des Freigabecodes eine dem Freigabecode zugeordnete Freigabeinformation zu ermitteln, durch welche ein Zeitpunkt und/oder ein Zeitbereich definiert wird, um wie oben beschrieben beispielsweise eine zur Entnahme freizugebende feste Energiemenge aufgrund tageszeitabhängiger Preiszuschläge anzupassen.

Die Einrichtung zum Empfangen eines Freigabecodes kann vorteilhaft als manuelle Eingabeeinrichtung mit alphanumerischer Tastatur, als Leseeinrichtung zum Einlesen eines Freigabecodes, welcher in einer Grafik codiert ist, oder als Kommunikationsschnittstelle, insbesondere zur drahtlosen Kommunikation, ausgebildet sein.

Vorzugsweise ist die Entnahmevorrichtung dazu ausgebildet, bei Entnahme einer kleineren Energiemenge als einer freigegebenen festen Energiemenge, einen weiteren Freigabecode und eine zugeordnete weitere Freigabe-Mengeninformation zu erzeugen, wobei die weitere Freigabe-Mengeninformation eine feste Entnahmemenge definiert, welche der Differenz der freigegebenen und der entnommenen Energiemenge entspricht, und den weiteren Freigabecode auf einer Anzeigeeinrichtung anzuzeigen oder zu einem Kommunikationsendgerät zu übertragen.

Ferner ist die Entnahmevorrichtung vorteilhaft dazu ausgebildet, den Freigabecode nach erfolgreicher Prüfung zu entwerten, um eine erneute erfolgreiche Prüfung des Freigabecodes zu verhindern. Zu diesem Zweck kann die Entnahmevorrichtung vorteilhaft dazu ausgebildet sein, mit einem entfernten Server zu kommunizieren, um das Löschen oder das Deaktivieren des zu entwertenden Freigabecodes aus einer Liste gültiger Freigabecodes zu bewirken, wobei der Server insbesondere dem Portal oder dem jeweiligen Anbieter zugeordnet sein kann.

Ferner liegt auch ein System zur Freigabe der Entnahme einer definierten Energiemenge im Rahmen der Erfindung, umfassend einen Internet-Server zur Bereitstellung eines Portals zur Abwicklung eines elektronischen Bezahlvorgangs oder Bestellvorgangs und zur Bereitstellung eines Freigabecodes und einer zugeordneten Freigabe-Mengeninformation, welche eine feste oder variable Entnahmemenge definiert, sowie wenigstens eine oben beschriebene Entnahmevorrichtung.

Vorteilhaft umfasst das System ferner wenigstens ein Kommunikationsendgerät, in welchem der Freigabecode bereitgestellt wird und welches zur Kommunikation mit der Entnahmevorrichtung ausgebildet ist.

Ferner kann das System vorteilhaft einen von der Entnahmevorrichtung entfernten Server zur Weiterleitung des Freigabecodes von dem Kommunikationsendgerät zu der Entnahmevorrichtung umfassen.

Es sei insbesondere angemerkt, dass auch Ausführungsformen des Systems und der Entnahmevorrichtung im Rahmen der Erfindung liegen, welche derart ausgebildet sind, dass sie zum Durchführen der unterschiedlichen Ausführungsformen des oben beschriebenen Verfahrens einsetzbar sind.

Die Erfindung wird nachfolgend anhand einiger Ausführungsbeispiele in Verbindung mit den Zeichnungen näher erläutert. Es zeigen:
- Fig. 1: schematisch ein System, welches zur Durchführung einer bevorzugten Ausführungsform eines erfindungsgemäßen Verfahrens ausgebildet ist, und
- Fig. 2: schematisch eine bevorzugte Ausführungsform einer erfindungsgemäßen Entnahmevorrichtung.

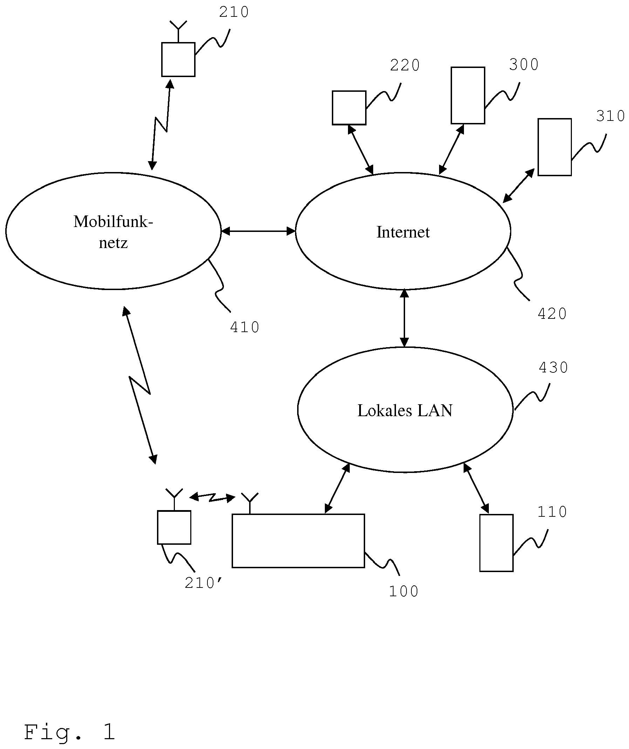

In Fig. 1 ist schematisch ein zur Durchführung des oben beschriebenen Verfahrens ausgebildetes System dargestellt. Im Folgenden wird beispielhaft der Ablauf des Verfahrens beschrieben.

Aus Sicht des Kunden wird durch das Verfahren eine Möglichkeit geschaffen, Energie, beispielsweise in Form von Kraftstoff oder in einer anderen Form, online zu kaufen. Hierzu können beispielsweise bekannte Vergleichsportale oder entsprechende mobile Apps um eine Kaufmöglichkeit erweitert werden.

Ein Portal zur Abwicklung eines elektronischen Bezahlvorgangs und/oder Bestellvorgangs und zur Bereitstellung einer entsprechenden Freigabeinforation wird in dem in Fig. 1 dargestellten System durch den Internet-Server 300 bereitgestellt, welcher mit dem Internet 420 verbunden ist.

Ein Kunde kann auf das Portal beispielsweise mit einem an das Internet 420 angeschlossenen Computer 220 oder mit einem Smartphone 210 zugreifen, welches über ein Mobilfunknetz 410 und das Internet 420 mit dem Internet-Server 300 kommunizieren kann.

In dem Portal wählt der Kunde die ihm genehme Tankstelle bzw. Marke, d.h. Tankstellenkette, aus und bestellt zum aktuell angebotenen Preis die von ihm gewünschte Energieart und Energiesorte, zum Beispiel Diesel, in der von ihm gewünschten Menge, zum Beispiel 50 l. Alternativ kann der Kunde auch eine variable Energiemenge der von ihm gewünschten Energieart und Energiesorte bestellen. Nach Bezahlung, beispielsweise per Kreditkarte, bzw. Bestellung erhält der Kunde beispielsweise via E-Mail oder als direkte Übertragung auf die mobile App einen Freigabecode. Bei Bestellung einer variablen Energiemenge erfolgt die Bezahlung nach erfolgter Entnahme und Erfassen der tatsächlich entnommenen Energiemenge, beispielsweise mittels einer bei einer Vorabregistrierung festgelegten Zahlungsart. Zusätzlich wird eine dem Freigabecode zugeordnete Freigabe-Mengeninformation bereitgestellt, beispielsweise als Bestandteil des Freigabecodes oder in einer Datenbank gespeichert, so dass die Freigabe-Mengeninformation unter Verwendung des Freigabecodes durch eine Entnahmevorrichtung aus der Datenbank abgerufen werden kann. Die Datenbank kann in dem Internet-Server 300 angeordnet sein oder aber auch in einem, nicht dargestellten, dem jeweiligen Anbieter, d.h. zum Beispiel einer Tankstellenkette oder einer individuellen Tankstelle, zugeordneten Server oder Computer.

Es sei angenommen, dass im genannten Beispiel die Freigabe-Mengeninformation eine Entnahmemenge von 50 l definiert. Bei einer Übermittlung via E-Mail ist vorzugsweise eine entsprechende Registrierung vorgesehen, damit die vom Kunden angegebene E-Mail-Adresse verifiziert werden kann. Auch bei der Nutzung einer App ist vorteilhaft eine Registrierung vorgesehen. Der Freigabecode kann insbesondere ein numerischer oder alphanumerischer Code sein, wobei der Freigabecode auch in einer Grafik codiert sein kann, zum Beispiel in Form eines Barcodes oder QR-Codes, um ein automatisches Einlesen mittels einer entsprechenden Leseeinrichtung zu ermöglichen.

In einer vorteilhaften Ausgestaltung des Verfahrens kann ferner vorgesehen sein, dass das Fahrzeug des Kunden eine Information über die benötigte Energiemenge bereitstellt. Dies kann beispielsweise mittels einer Anzeige der freien Kapazität im Tank erfolgen. Besonders vorteilhaft weist das Fahrzeug eine Schnittstelle auf, welche dazu ausgebildet ist, die freie Kapazität bzw. die maximal zu wählende Energiemenge beispielsweise zu einem Kommunikationsendgerät des Nutzers zu übertragen. Dieser übertragene Wert einer Energiemenge kann dann vorteilhaft automatisch beim Kauf- bzw. Bestellvorgang verwendet werden.

Mittels des Freigabecodes kann der Kunde den von ihm gekauften bzw. bestellten Treibstoff an der von ihm gewählten Tankstelle bzw. einer beliebigen Tankstelle der von ihm gewählten Tankstellenkette/-marke beziehen und den Tank seines Autos entsprechend füllen.

In dem in Fig. 1 dargestellten Beispiel wird die Entnahmevorrichtung beispielsweise durch eine einzelne Tanksäule 100, die über ein lokales LAN 430 mit dem Internet 420 verbunden ist, gebildet oder durch ein Tankstellensystem, welches einen Tankstellen-Computer 110 und wenigstens einer Tanksäule 100 umfasst, die über das lokale LAN 430 miteinander und mit dem Internet 420 verbunden sind.

Die Entnahmevorrichtung weist eine Eingabemöglichkeit für den Freigabecode auf, beispielswiese in Form einer Tastatur oder eines Scanners, welche an der Tanksäule 100 oder an anderer Stelle des Tankstellensystems angeordnet sein kann.

Alternativ kann der Freigabecode auch elektronisch an die Tankstelle bzw. an die Tanksäule 100 übermittelt werden, insbesondere mittels M2M-Kommunikation (Machine-to-Machine-Kommunikation), wobei in diesem Fall der Freigabecode vorteilhaft auf dem Smartphone 210' bereitgestellt wird und mittels entsprechender Schnittstellen, beispielsweise basierend auf Bluetooth oder NFC, zur Entnahmevorrichtung übertragen wird.

In einer weiteren Alternative kann vorteilhaft vorgesehen sein, dass das Übermitteln des Freigabecodes an die Tanksäule 100 dadurch erfolgt, dass zunächst eine Identifikationsinformation, welche die Tanksäule 100 identifiziert, zum Smartphone 210' übertragen wird, wobei dies beispielsweise dadurch erfolgt, dass an der Tanksäule eine codierte Grafik, wie zum Beispiel ein QR-Code, angebracht ist, die vom Smartphone 210', beispielsweise mittels einer integrierten Kamera, eingelesen wird.

Der Freigabecode wird dann zusammen mit der Identifikationsinformation von dem Smartphone 210' zu einem entfernten Server 310 über das Mobilfunknetz 410 und das Internet 420 übertragen. Der entfernte Server 310 überträgt, unter Ansprechen auf die empfangene Identifikationsinformation, den Freigabecode zu der durch die Identifikationsinformation identifizierten Tanksäule 100. Der entfernte Server 310 kann vorteilhaft dem jeweiligen Anbieter, d.h. zum Beispiel einer Tankstellenkette oder einer individuellen Tankstelle, zugeordnet sein und von diesem betrieben werden. Auch kann der entfernte Server 310 die oben beschriebene anbieterseitige Datenbank umfassen.

Der entfernte Server 310 dient im dargestellten Ausführungsbeispiel insbesondere der Weiterleitung des Freigabecodes von dem Smartphone 210' zu der Tanksäule 100. Es sei angemerkt, dass die Funktionalität des entfernten Servers 310 auch in dem Server 300 integriert sein kann.

Die Tankstelle bzw. die Tanksäule 100 überprüft den eingegebenen bzw. übertragenen Freigabecode. Ist die Prüfung erfolgreich, d.h. ist der Freigabecode gültig, ermittelt die Tankstelle bzw. die Tanksäule 100 die zugeordnete Freigabe-Mengeninformation sowie im dargestellten Beispiel eine zusätzliche Freigabeinformation, beispielsweise durch Abrufen aus einer Datenbank über das Internet unter Verwendung des Freigabecodes, und es wird das Tanken der in der Freigabe-Mengeninformation definierten Menge des in der zusätzlichen Freigabeinformation definierten Kraftstoffes freigegeben, so dass der Kunde den jeweiligen Kraftstoff bis zur freigegebene Menge tanken kann. Im genannten Beispiel kann der Kunde somit bis zu 50 l Diesel tanken. Es kann zusätzlich vorgesehen sein, dass in der zusätzlichen Freigabeinformation ein Zeitpunkt und/oder ein Zeitbereich definiert wird. Es sei angenommen, dass im dargestellten Beispiel ein Tageszeitbereich zwischen 6:00 h und 22:00 h in der Freigabeinformation definiert ist, wobei durch diesen ein zuschlagsfreier Entnahmezeitraum definiert wird. Entnimmt der Kunde den Dieselkraftstoff innerhalb dieses Zeitbereiches, so kann er wie oben beschrieben bis zu 50 l Diesel tanken. Tankt er jedoch außerhalb dieses Zeitbereiches, beispielsweise um 3:00 h nachts, so wird durch die Entnahmevorrichtung eine angepasste Energiemenge zur Entnahme freigegeben, so dass im dargestellten Beispiel der Kunde nur bis zu 45,45 l tanken kann. Zu diesem Zweck vergleicht die Entnahmevorrichtung den Entnahmezeitpunkt, 3:00 h nachts, mit dem in der Freigabeinformation definierten Zeitbereich, und wenn die Entnahmevorrichtung feststellt, dass der Entnahmezeitpunkt außerhalb des Zeitbereiches liegt, ermittelt die Entnahmevorrichtung eine freizugebende Energiemenge durch Multiplikation der in der Freigabe-Mengeninformation definierten festen Entnahmemenge mit einem vorgegebenen oder in der Freigabeinformation enthaltenen Faktor, welcher im vorliegenden Beispiel 0,909, entsprechend einem Preiszuschlag von 10%, beträgt. Die so ermittelte freizugebende Energiemenge wird dann von der Entnahmevorrichtung zur Entnahme freigegeben.

Es sei angemerkt, dass im dargestellten Beispiel das Smartphone 210' mit dem Smartphone 210 identisch ist, wobei sich dieses zu unterschiedlichen Zeiten an unterschiedlichen Orten befindet. So ist das Smartphone während des Kaufvorgangs mit dem Bezugszeichen 210 bezeichnet und während des Entnahmevorgangs mit dem Bezugszeichen 210'.

Es sei ferner angemerkt, dass statt wie im dargestellten Ausführungsbeispiel eine feste Energiemenge zu kaufen, der Kunde auch eine variable Energiemenge bestellen kann, wodurch eine variable Energiemenge zur Entnahme freigegeben wird, für die in der Freigabe-Mengeninformation eine Ober- und/oder Untergrenze definiert sein kann. Wird beispielsweise eine variable Energiemenge der Energieart Diesel und eine Obergrenze von 50 l definiert, so kann der Kunde ebenfalls bis zu 50 l Diesel tanken. Der Unterschied besteht jedoch darin, dass der Kunde auch weniger als 50 l tanken kann, die tatsächlich entnommene Energiemenge von der Entnahmevorrichtung erfasst und die erfasste Energiemenge von der Entnahmevorrichtung zum Anbieter übermittelt wird, und der Kaufvorgang dann anbieterseitig abgeschlossen wird. Auch bei Bestellen einer variablen Energiemenge können zeitabhängige Preisanpassungen vorgesehen sein. Zu diesem Zweck wird vorteilhaft auch der Entnahmezeitpunkt von der Entnahmevorrichtung erfasst und der erfasste Entnahmezeitpunkt von der Entnahmevorrichtung zum Anbieter übermittelt wird.

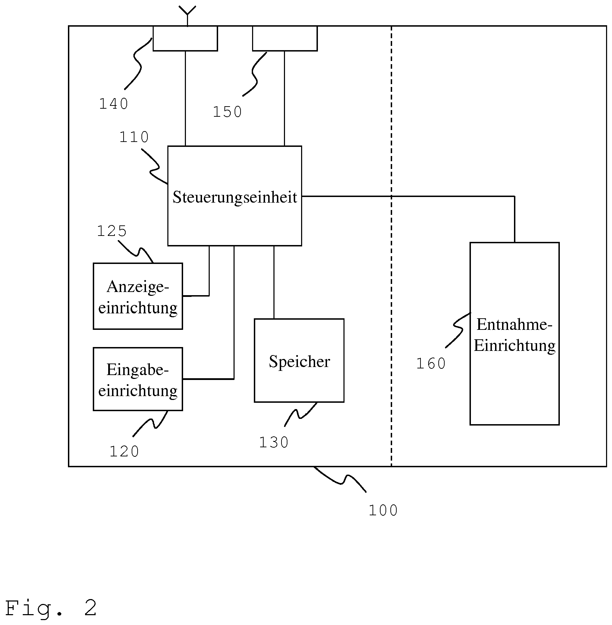

Im erstgenannten Beispiel der Freigabe einer festen Energiemenge ist der Kaufvorgang bei Entnahme hingegen bereits abgeschlossen. Für den Fall, dass eine kleinere Energiemenge als die freigegebene feste Energiemenge entnommen wird, ist dementsprechend vorteilhaft vorgesehen, dass ein weiterer Freigabecode und eine zugeordnete weitere Freigabe-Mengeninformation durch die Entnahmevorrichtung erzeugt werden, wobei die weitere Freigabe-Mengeninformation eine feste Entnahmemenge definiert, welche der Differenz der freigegebenen und der entnommenen Energiemenge entspricht, und dass der weitere Freigabecode auf einer Anzeigeeinrichtung der Entnahmevorrichtung, wie der in Fig. 2 dargestellten Anzeigeeinrichtung 125, angezeigt und/oder der weitere Freigabecode von der Tanksäule 100 zu dem Kommunikationsendgerät 210' übertragen wird. Dieser weitere Freigabecode kann dann zu einem späteren Zeitpunkt für eine erneute Entnahme verwendet werden. Es kann auch vorgesehen sein, dass die Entnahmevorrichtung eine, nicht dargestellte, Druckereinrichtung umfasst, mittels der der weitere Freigabecode ausgedruckt wird. Vorteilhaft wird die erzeugte weitere Freigabe-Mengeninformation derart in einer Datenbank gespeichert, dass diese unter Verwendung des weiteren Freigabecodes abgerufen werden kann. Das Speichern der weiteren Freigabe-Mengeninformation in der Datenbank wird dabei durch die Entnahmevorrichtung bewirkt.

Sollte die im dargestellten Beispiel freigegebene feste Energiemenge nicht zum Volltanken bzw. zur Vollaufladung des Akkumulators ausreichen, können verschiedene Optionen vorgesehen sein, um auch für diesen Fall eine gewisse Variabilität zu gewährleisten.

Im einfachsten Fall kann ein weiteres Tanken bzw. Aufladen auf herkömmliche Weise zum jeweils aktuellen Preis und mit einem vor Ort an der Tankstelle durchzuführenden Bezahlvorgang erfolgen.

Es kann aber auch vorteilhaft vorgesehen sein, ein Volltanken bzw. eine Vollaufladung zu dem gleichen Preis zu ermöglichen, zu dem die in der dem Freigabecode zugeordneten Freigabe-Mengeninformation definierte feste Energiemenge gekauft wurde. In diesem Fall umfasst die zusätzliche Freigabeinformation eine entsprechende Preisinformation und die über die freigegebene feste Energiemenge hinaus entnommene Energiemenge wird vom Kunden vor Ort auf herkömmliche Weise bezahlt, wobei sich der Bezahlbetrag aus der zusätzlich entnommenen Energiemenge und der in der Freigabeinformation enthaltenen Preisinformation ergibt. Um Missbrauch zu vermeiden, kann ferner vorteilhaft vorgesehen sein, eine solche Überentnahme bei gleichem Preis auch in diesem Fall mengenmäßig zu beschränken, wobei eine solche Mengenbeschränkung absolut oder relativ definiert sein kann, d.h. zum Beispiel eine Mengenbeschränkung auf höchstens 25 % der freigegebenen festen Energiemenge oder höchstens 15 l mehr als die freigegebene feste Energiemenge. Eine solche Mengenbeschränkung kann allgemein festgelegt sein oder durch entsprechende weitere in der zusätzlichen Freigabeinformation enthaltene Informationen definiert sein.

Fig. 2 zeigt schematisch eine bevorzugte Ausführungsform der in Fig. 1 dargestellten Tanksäule 100, die allein oder in Kombination beispielsweise mit einem Tankstellen-Computer 110 eine Entnahmevorrichtung zur Freigabe der Entnahme einer definierten Energiemenge bilden kann. Es sei angemerkt, dass auch vorgesehen sein kann, dass das Smartphone 210' statt wie beschrieben mit der Tanksäule 100 mit einer anderen Einrichtung der Entnahmevorrichtung kommuniziert.

Im dargestellten Ausführungsbeispiel weist die Tanksäule 100 mehrere alternative Einrichtungen zum Empfangen eines Freigabecodes auf. So ist eine Eingabeeinrichtung 120 vorgesehen, die in Verbindung mit der Anzeigeeinrichtung 125 eine Benutzerschnittstelle bilden kann. Die Eingabeeinrichtung 120 kann auch als Leseeinrichtung zum Einlesen eines Freigabecodes in Form einer codierten Grafik ausgebildet sein. Ferner ist eine Kommunikationsschnittstelle 140 vorgesehen, über welche die Tanksäule drahtlos beispielsweise mit dem Smartphone 210' kommunizieren und von diesem einen Freigabecode empfangen kann.

Im dargestellten Beispiel dient eine weitere Kommunikationsschnittstelle 150 zum Anschließen der Tanksäule 100 an das lokale LAN 430.

Die Steuerungseinheit 110 ist dazu ausgebildet, einen empfangenen Freigabecode zu prüfen und bei erfolgreicher Prüfung des Freigabecodes eine zugeordnete Freigabe-Mengeninformation sowie gegebenenfalls zusätzliche Freigabeinformationen zu ermitteln, beispielsweise durch Abrufen aus einer Datenbank unter Verwendung des empfangenen Freigabecodes, sowie eine Entnahme einer durch die ermittelte Freigabe-Mengeninformation definierten festen oder variablen Energiemenge freizugeben. Zu diesem Zweck ist die Steuerungseinheit 110 mit der Eingabeeinrichtung 120, der Anzeigeeinrichtung 125, den Schnittstellen 140 und 150, sowie mit der Entnahmeeinrichtung 160 verbunden. Die Entnahmeeinrichtung 160 dient der Entnahme einer freigegebenen Energiemenge und wird zu diesem Zweck von der Steuerungseinheit 110 gesteuert.

Im dargestellten Ausführungsbeispiel ist ferner ein mit der Steuerungseinheit 110 verbundener Speicher 130 vorgesehen, in welchem beispielsweise eine der Tanksäule 100 oder der zugehörigen Tankstelle oder Tankstellenkette zugeordnete Identifikationsinformation, oder kurz ID, gespeichert ist. Diese ID wird insbesondere zur Prüfung eines Freigabecodes mit einer im Freigabecode enthaltenen Entnahme-ID verglichen. Im Speicher 130 kann ferner ein kryptographischer Schlüssel zum Entschlüsseln eines verschlüsselten Freigabecodes gespeichert sein.

Einzelne Komponenten der in Fig. 2 dargestellten Tanksäule 100, insbesondere die links von der gestrichelten Linie dargestellten Komponenten, können statt in der Tanksäule 100 alternativ auch an anderer Stelle im Tankstellensystem angeordnet sein. Es kann beispielsweise für eine Mehrzahl von Tanksäulen 100 eine zentrale Eingabeeinrichtung und eine zentrale Steuerungseinheit vorgesehen sein, beispielsweise in dem Tankstellen-Computer 110, wobei die Entnahmeeinrichtungen der einzelnen Tanksäulen 100 von der zentralen Steuerungseinheit angesteuert werden.

## Patentansprüche

1. Verfahren zur Freigabe der Entnahme einer definierten Energiemenge an einer Entnahmevorrichtung (100), umfassend die Schritte:
- Bereitstellen eines Freigabecodes und einer zugeordneten Freigabe-Mengeninformation, wobei die Freigabe-Mengeninformation eine feste oder variable Entnahmemenge definiert,
- Übermitteln des Freigabecodes an die Entnahmevorrichtung (100),
- Prüfen des Freigabecodes auf Gültigkeit durch die Entnahmevorrichtung (100),
- Ermitteln der Freigabe-Mengeninformation in Abhängigkeit des Freigabecodes durch die Entnahmevorrichtung (100) und
- Freigabe der Entnahme einer festen oder variablen Energiemenge in Abhängigkeit der ermittelten Freigabe-Mengeninformation bei erfolgreicher Prüfung des Freigabecodes.

2. Verfahren nach Anspruch 1, wobei der Freigabecode und die zugeordnete Freigabe-Mengeninformation nach erfolgreicher Durchführung eines elektronischen Bezahlvorgangs oder Bestellvorgangs einem Kunden bereitgestellt werden, wobei der elektronische Bezahlvorgang oder Bestellvorgang insbesondere über ein von einem Internet-Server (300) bereitgestelltes Portal durchgeführt wird, und wobei insbesondere der Freigabecode mit zugeordneten Freigabeinformationen, welche wenigstens die zugeordnete Freigabe-Mengeninformation umfassen, dem jeweiligen Anbieter bereitgestellt werden.

3. Verfahren nach einem der vorstehenden Ansprüche, wobei eine dem Freigabecode zugeordnete Freigabeinformation bereitgestellt und durch die Entnahmevorrichtung (100) in Abhängigkeit des Freigabecodes ermittelt wird, durch welche ein Preiszuschlagsfaktor und/oder ein Zeitpunkt und/oder ein Zeitbereich, insbesondere ein Tageszeitbereich, definiert werden und wobei das Prüfen des Freigabecodes auf Gültigkeit und/oder die Freigabe der Entnahme einer festen Energiemenge in Abhängigkeit der ermittelten Freigabeinformation erfolgt.

4. Verfahren nach einem der vorstehenden Ansprüche, welches bei Freigabe der Entnahme einer variablen Energiemenge ferner die folgenden Schritte umfasst:
- Entnehmen einer Energiemenge an der Entnahmevorrichtung (100),
- Erfassen einer Entnahmeinformation in Abhängigkeit der entnommenen Energiemenge und/oder in Abhängigkeit des Entnahmezeitpunktes durch die Entnahmevorrichtung (100), und
- Bereitstellen der Entnahmeinformation dem Anbieter zum Durchführen einer Kaufabwicklung zu einem Bestellvorgang.

5. Verfahren nach einem der vorstehenden Ansprüche, wobei die Freigabe-Mengeninformation eine Obergrenze und/oder eine Untergrenze für eine variable Entnahmemenge umfasst.

6. Verfahren nach einem der vorstehenden Ansprüche, wobei die definierte Energiemenge eine definierte Menge fossiler Energie, insbesondere in Form einer definierten Menge eines definierten Kraftstoffes, oder eine definierte Menge elektrischer Energie ist, und wobei eine dem Freigabecode zugeordnete Freigabeinformation, durch welche die Energieart und/oder die Kraftstoffart definiert wird, bereitgestellt und durch die Entnahmevorrichtung (100) in Abhängigkeit des Freigabecodes ermittelt wird.

7. Verfahren nach einem der vorstehenden Ansprüche, wobei das Übermitteln des Freigabecodes an die Entnahmevorrichtung (100) mittels einer Eingabeeinrichtung (120) der Entnahmevorrichtung (100) erfolgt.

8. Verfahren nach einem der vorstehenden Ansprüche, wobei der Freigabecode auf einem Kommunikationsendgerät (210) bereitgestellt und von dem Kommunikationsendgerät (201') zu der Entnahmevorrichtung (100) übertragen wird, insbesondere mittels drahtloser Kommunikation.

9. Verfahren nach einem der vorstehenden Ansprüche, wobei der Freigabecode auf einem Kommunikationsendgerät (210) bereitgestellt wird, und wobei das Übermitteln des Freigabecodes an die Entnahmevorrichtung (100) folgende Schritte umfasst:
- Übertragen einer Identifikationsinformation, welche die Entnahmevorrichtung (100) identifiziert, zu dem Kommunikationsendgerät (201'),
- Übertragen des Freigabecodes und der Identifikationsinformation von dem Kommunikationsendgerät (210') zu einem entfernten Server (300, 310) über ein Kommunikationsnetzwerk (410, 420),
- Übertragen des Freigabecodes von dem entfernten Server (300, 310) zu der Entnahmevorrichtung (100) durch den entfernten Server (300, 310) unter Ansprechen auf die empfangene Identifikationsinformation.

10. Verfahren nach einem der vorstehenden Ansprüche, wobei das Bereitstellen der Freigabe-Mengeninformation das Speichern der Freigabe-Mengeninformation in einer Datenbank umfasst, wobei die Freigabe-Mengeninformation unter Verwendung des Freigabecodes durch die Entnahmevorrichtung (100) abrufbar ist, und wobei das Ermitteln der Freigabe-Mengeninformation durch die Entnahmevorrichtung (100) das Abrufen der Freigabe-Mengeninformation aus der Datenbank unter Verwendung des empfangenen Freigabecodes umfasst.

11. Verfahren nach einem der vorstehenden Ansprüche, ferner umfassend die Schritte:
- Entnehmen einer kleineren Energiemenge als einer freigegebenen festen Energiemenge,
- Erzeugen eines weiteren Freigabecodes und einer zugeordneten weiteren Freigabe-Mengeninformation durch die Entnahmevorrichtung (100), wobei die weitere Freigabe-Mengeninformation eine feste Entnahmemenge definiert, welche der Differenz der freigegebenen und der entnommenen Energiemenge entspricht, und
- Anzeigen des weiteren Freigabecodes auf einer Anzeigeeinrichtung (125) der Entnahmevorrichtung (100) und/oder Übertragen des weiteren Freigabecodes von der Entnahmevorrichtung (100) zu einem Kommunikationsendgerät (210').

12. Verfahren nach einem der vorstehenden Ansprüche, ferner umfassend den Schritt:
- Entwerten des Freigabecodes nach erfolgreicher Prüfung des Freigabecodes, um eine erneute erfolgreiche Prüfung des Freigabecodes zu verhindern.

13. Entnahmevorrichtung (100), ausgebildet zur Freigabe der Entnahme einer definierten Energiemenge, umfassend:
- eine Einrichtung (120, 140, 150) zum Empfangen eines Freigabecodes,
- eine Steuerungseinheit (110), welche dazu ausgebildet ist, den Freigabecode zu prüfen und bei erfolgreicher Prüfung des Freigabecodes eine zugeordnete Freigabe-Mengeninformation, welche eine feste oder variable Entnahmemenge definiert, zu ermitteln und in Abhängigkeit der ermittelten Freigabe-Mengeninformation eine Entnahme einer festen oder variablen Energiemenge freizugeben, und
- eine Entnahmeeinrichtung (160) zur Entnahme einer freigegebenen Energiemenge.

14. Entnahmevorrichtung nach Anspruch 13, ausgebildet zur Abgabe einer definierten Menge fossiler Energie, insbesondere in Form einer definierten Menge eines definierten Kraftstoffes, oder einer definierten Menge elektrischer Energie, wobei die Steuerungseinheit (110) dazu ausgebildet ist, in Abhängigkeit des Freigabecodes eine dem Freigabecode zugeordnete Freigabeinformation zu ermitteln, durch welche die Energieart und/oder die Kraftstoffart definiert wird.

15. Entnahmevorrichtung nach einem der Ansprüche 13 oder 14, wobei die Einrichtung (120, 140, 150) zum Empfangen eines Freigabecodes als manuelle Eingabeeinrichtung (120), als Leseeinrichtung (120) zum Einlesen eines Freigabecodes in Form einer codierten Grafik, oder als Kommunikationsschnittstelle (140, 150), insbesondere zur drahtlosen Kommunikation, ausgebildet ist.

16. Entnahmevorrichtung nach einem der Ansprüche 13 bis 15, dazu ausgebildet, bei Entnahme einer kleineren Energiemenge als einer freigegebenen festen Energiemenge, einen weiteren Freigabecode und eine zugeordnete weitere Freigabe-Mengeninformation zu erzeugen, wobei die weitere Freigabe-Mengeninformation eine feste Entnahmemenge definiert, welche der Differenz der freigegebenen und der entnommenen Energiemenge entspricht, und den weiteren Freigabecode auf einer Anzeigeeinrichtung (125) anzuzeigen oder zu einem Kommunikationsendgerät (210') zu übertragen.

17. Entnahmevorrichtung nach einem der Ansprüche 13 bis 16, dazu ausgebildet, den Freigabecode nach erfolgreicher Prüfung zu entwerten, um eine erneute erfolgreiche Prüfung des Freigabecodes zu verhindern.

18. System zur Freigabe der Entnahme einer definierten Energiemenge, umfassend
- einen Internet-Server zur Bereitstellung eines Portals zur Abwicklung eines elektronischen Bezahlvorgangs oder Bestellvorgangs und zur Bereitstellung eines Freigabecodes und einer zugeordneten Freigabe-Mengeninformation, wobei die Freigabe-Mengeninformation eine feste oder variable Entnahmemenge definiert, und
- wenigstens eine Entnahmevorrichtung nach einem der Ansprüche 12 bis 16.

19. System nach Anspruch 18, ferner umfassend
- wenigstens ein Kommunikationsendgerät (210'), in welchem der Freigabecode bereitgestellt wird und welches zur Kommunikation mit der Entnahmevorrichtung (100) ausgebildet ist.
